# EUROPÄISCHE PATENTSCHRIFT

(11) **EP 4 051 937 B1**
(45) Veröffentlichungstag und Bekanntmachung des Hinweises auf die Patenterteilung: **03.07.2024**
(21) Anmeldenummer: 20793599.0
(22) Anmeldetag: 14.10.2020
(51) Int. Cl.: F16K 51/02, F16K 3/18, F16K 3/316

(54) **VAKUUMVENTIL**
VACUUM VALVE
SOUPAPE À VIDE

(30) Priorität: 30.10.2019 DE 102019129344
(43) Veröffentlichungstag der Anmeldung: 07.09.2022
(73) Patentinhaber: VAT Holding AG, 9469 Haag (CH)
(72) Erfinder: BLECHA, Thomas, 6800 Feldkirch (AT)
(74) Vertreter: Torggler & Hofmann Patentanwälte - Rankweil
(86) Internationale Anmeldenummer: PCT/EP2020/078921
(87) Internationale Veröffentlichungsnummer: WO 2021/083669

(56) Entgegenhaltungen:
- WO-A1-2014/174926
- WO-A1-2016/142150
- WO-A1-2016/155976
- US-B2- 7 611 122
- US-B2- 9 732 860
- US-B2- 9 957 745
- US-B2- 10 234 059

## Beschreibung

Die Erfindung bezieht sich auf ein Vakuumventil umfassend einen Ventilkörper mit einer von einem Ventilsitz umgebenen Ventilöffnung, ein Verschlussglied, welches zwischen einer Offenstellung, in der es die Ventilöffnung freigibt, und einer Zwischenstellung, in der es die Ventilöffnung überdeckt aber vom Ventilsitz abgehoben ist, parallel zu einer Längs-Verstellrichtung verstellbar ist und welches zwischen der Zwischenstellung und der Schließstellung, in der es am Ventilsitz anliegt, parallel zu einer Quer-Verstellrichtung verstellbar ist, mindestens eine das Verschlussglied tragende, parallel zur Längs-Verstellrichtung liegende Ventilstange, mindestens ein Führungsstück, einen Längshub-Antrieb, von dem zur Verstellung des Verschlussglieds zwischen der Offenstellung und der Zwischenstellung die mindestens eine Ventilstange parallel zur Längs-Verstellrichtung verschiebbar ist, einen Querhub-Antrieb, von dem zur Verstellung des Verschlussglieds zwischen der Zwischenstellung und der Schließstellung das mindestens eine Führungsstück parallel zur Quer-Verstellrichtung verschiebbar ist, und mindestens ein Schiebeteil, welches von mindestens einer Primär-Linearführung gegenüber dem Ventilkörper verschiebbar geführt ist und welches von mindestens einer Sekundär-Linearführung gegenüber dem mindestens einen Führungsstück verschiebbar geführt ist, wobei die Primär- und Sekundär-Linearführungen gegenüber der Längs-Verstellrichtung jeweils einen Winkel von weniger als 45° aufweisen und die mindestens eine Primär-Linearführung mit der mindestens einen Sekundär-Linearführung einen Winkel von mehr als 3° und weniger als 45° einschließt und wobei zur Verstellung des mindestens einen Führungsstücks parallel zur Quer-Verstellrichtung das mindestens eine Schiebeteil vom Querhub-Antrieb verschiebbar ist.

Vakuumventile, bei denen zum Schließen des Vakuumventils das Verschlussglied zunächst in eine parallel zur Ventilstange liegende Längs-Verstellrichtung von einer Offenstellung in eine Zwischenstellung verschoben wird, in welcher das Verschlussglied die Ventilöffnung überdeckt, vom Ventilsitz aber noch abgehoben ist, und in der Folge in eine winkelig zur Längs-Verstellrichtung liegende Quer-Verstellrichtung an den Ventilsitz angelegt wird, werden auch als L-Ventile bezeichnet.

Bei einer nicht gattungsgemäßen Bauweise von L-Ventilen ist die Ventilstange um eine rechtwinkelig zur Längs-Verstellrichtung stehende Achse verschwenkbar gelagert, um die Verstellung der Ventilplatte von ihrer Zwischenstellung in ihre Schließstellung und zurück zu ermöglichen. Zum Verschwenken der Ventilstange um die Achse können hierbei Kulissenführungen dienen, wie dies beispielsweise aus der US 6,237,892 B1, US 7,066,443 B2 oder US 2012/0258242 A1 bekannt ist.

Bei L-Ventilen, bei denen zur Verstellung des Verschlussgliedes zwischen der Zwischenstellung und der Schließstellung eine Parallelverschiebung des Verschlussgliedes in eine winkelig, insbesondere rechtwinkelig, zur Längs-Verstellrichtung stehende Quer-Verstellrichtung erfolgt, sind gemäß einer herkömmlichen Ausführungsform Antriebselemente zur Verstellung des Verschlussgliedes zwischen der Zwischenstellung und der Schließstellung an einer das Verschlussglied tragenden Trageinheit angeordnet, wobei die Trageinheit sich innerhalb des Ventilgehäuses des Vakuumventils befindet und an einer aus dem Vakuumbereich des Vakuumventils herausgeführten Ventilstange angebracht ist. Derartige Ausführungen von L-Ventilen gehen beispielsweise aus der US 6,056,266 A, US 6,899,316 B2, US 7,611,122 B2, US 6,056,266 A, US 7,611,122 B2 und US 8,177,190 B2 hervor.

L-Ventile mit einer linearen Verschiebung des Verschlussgliedes zwischen der Zwischenstellung und der Schließstellung gehen aus der WO 2010/034046 A1, WO 2015/139818 A1, WO 2014/075757 A1 und US 9,732,860 B2 hervor. Es sind sowohl der Antrieb für die Verstellung des Verschlussgliedes zwischen der Offen- und der Zwischenstellung, als auch der Antrieb für die Verstellung des Verschlussgliedes zwischen der Zwischen- und der Schließstellung außerhalb des Vakuumbereichs des Vakuumventils angeordnet.

Beim aus der WO 2010/034046 A1 bekannten Vakuumventil ist außerhalb des Vakuumbereichs ein die Ventilstange in die Längs-Verstellrichtung verschiebbar lagerndes Führungsstück vorhanden, welches auch Zylinderräume für Kolben des Längshub-Antriebs aufweist und welche in eine rechtwinkelig zur Längsverstellrichtung liegende Quer-Verstellrichtung linear verschiebbar ist, wobei diese lineare Verschiebung mittels in diese Richtung wirkenden Kolben-Zylinder-Einheiten erfolgt. Ein ähnliches Vakuumventil geht aus der WO 2015/139818 A1 hervor.

Beim aus der WO 2014/075757 A1 bekannten Vakuumventil ist an der Ventilstange außerhalb des Vakuumbereichs ein Block angebracht, der von einem Führungsstück, das stangenförmige Führungsteile aufweist, in die Längs-Verschieberichtung verschiebbar geführt ist. Die stangenförmigen Führungsteile sind in die rechtwinkelig zur Längs-Verstellrichtung stehende Quer-Verstellrichtung verschiebbar, und zwar mittels eines von Kolben-Zylinder-Einheiten ausgebildeten Querhub-Antriebs. Zur Verschiebung der Ventilstange in die Längs-Verstellrichtung dienen mit dem Block verbundene Kolben-Zylinder-Einheiten.

Auch die US 7,762,527 B2 zeigt eine Ausführungsform eines L-Ventils, bei welcher die Antriebe zur linearen Verstellung des Verschlussgliedes in die Längs-Verstellrichtung und in die Quer-Verstellrichtung außerhalb des Vakuumbereichs des Vakuumventils angeordnet sind. Eine mögliche Ausbildung sieht hierbei vor, dass die Kolben-Zylinder-Einheit zur Verstellung des Verschlussgliedes in die Längs-Verstellrichtung gegenüber dem Ventilkörper mittels einer Linearführung in die rechtwinkelig zur Längs-Verstellrichtung liegende Quer-Verstellrichtung verschiebbar gelagert ist.

Aus der WO 2016/142150 A1 geht ein Vakuumventil der eingangs genannten Art hervor, bei dem ein an der Ventilstange außerhalb des Vakuumbereichs angebrachter Block mittels beidseitig an diesem angebrachten Linearführungen parallel zur Längs-Verstellrichtung verschiebbar ist, und zwar mittels einer am Block angreifenden Kolben-Zylinder-Einheit. Diese Linearführungen sind ihrerseits von beidseitig daran angebrachten weiteren Linearführungen, die schräg zur Längs- und Quer-Verstellrichtung stehen, verschiebbar geführt, wobei eine Verschiebung dieser weiteren Linearführungen mittels weiterer Kolben-Zylinder-Einheiten erfolgt. Ähnliche, derartige schräg zueinander stehende Linearführungen aufweisende Vakuumventile gehen auch aus der US 10,234,059 B2 und US 9,957,745 B2 hervor, wobei in der erstgenannten Schrift zwei Ventilplatten wechselweise an gegenüberliegende Ventilsitze angelegt werden können, um gegenüberliegende Ventilöffnungen zu verschließen, und in der zweitgenannten Schrift nur ein Antrieb vorhanden ist und eine Kopplung der Bewegungen der Linearführungen über Kopplungsfedern erfolgt, welche nach Anlauf eines an der Ventilstange angebrachten Blocks an einem Anschlag zusammengedrückt werden.

Andere Arten von Vakuumventilen sind bekannt, welche keilförmige Verschlussglieder aufweisen, die beim Schließen des Vakuumventils in keilförmige Flächen von Ventilsitzen eingedrückt werden, vgl. beispielsweise die WO 2011/088482 A1, DE 2013/006123 A1, US 9,664,293 B2 und WO 2017/025329 A1, oder welche Verschlussglieder mit zwei Platten aufweisen, die Schrägflächen besitzen und mittels mit diesen zusammenwirkenden Elementen auseinanderspreizbar sind, vgl. beispielsweise die US 4,560,141 A, US 4,052,036 A und US 4,470,576 A.

Aus der AT 511 372 A1 geht ein Vakuumventil hervor, bei welchem das Verschlussglied geradlinig in eine Schließrichtung von einer Offenstellung in eine Schließstellung verstellbar ist. Die beidseitig am Verschlussglied angebrachten Ventilstangen erstrecken sich hierbei vom Verschlussglied in die Schließrichtung, d.h. das Verschlussglied liegt in der Offenstellung auf der vom Antrieb abgelegenen Seite der Ventilöffnung.

Aufgabe der Erfindung ist es ein Vakuumventil der eingangs genannten Art bereitzustellen, bei dem in vorteilhafter Weise eine relativ große Schließkraft aufbringbar ist. Erfindungsgemäß gelingt dies durch ein Vakuumventil mit den Merkmalen des Anspruchs 1.

Beim Vakuumventil gemäß der Erfindung ist die mindestens eine Ventilstange von mindestens einem Führungsstück parallel zur Längs-Verstellrichtung linear verschiebbar geführt. Ein Längshub-Antrieb dient zur Verschiebung der mindestens einen Ventilstange gegenüber dem mindestens einen Führungsstück parallel zur Längs-Verstellrichtung. Ein Querhub-Antrieb dient zur linearen Verschiebung des mindestens einen Führungsstücks parallel zur winkelig, vorzugsweise rechtwinkelig zur Längs-Verstellrichtung stehenden, Quer-Verstellrichtung. Hierzu ist mindestens ein Schiebeteil vorgesehen, welches von einer Primär-Linearführung gegenüber dem Ventilkörper linear verschiebbar geführt ist und von einer Sekundär-Linearführung gegenüber dem mindestens einen Führungsstück linear verschiebbar geführt ist. Die Primär- und Sekundär-Linearführung weisen gegenüber der Längs-Verstellrichtung jeweils einen Winkel von weniger als 45°, vorzugsweise weniger als 25°, auf und schließen miteinander einen Winkel von mehr als 3°, vorzugsweise mehr als 4°, und weniger als 45°, vorzugweise weniger als 25°, ein. Zur Verstellung des Verschlussgliedes zwischen der Zwischenstellung und der Schließstellung wird das mindestens eine Schiebeteil vom Querhub-Antrieb verschoben. Dadurch wird das mindestens eine Führungsstück und damit die mindestens eine Ventilstange parallel zur Quer-Verstellrichtung linear verschoben, wodurch das Verschlussglied an den Ventilsitz angedrückt wird.

Durch die hohe beim Vakuumventil der Erfindung aufbringbare Schließkraft kann das Vakuumventil vorteilhafterweise eine relativ große Ventilöffnung aufweisen.

In einer vorteilhaften Ausführungsform der Erfindung befindet sich das Verschlussglied in der Offenstellung auf der vom Längshub- und Querhub-Antrieb abgelegenen Seite der Ventilöffnung. Das Verschlussglied kann sich dadurch in der Zwischen- und Schließstellung relativ nahe beim mindestens einen Führungsstück befinden, wodurch vorteilhafte Hebelverhältnisse beim Andrücken des Verschlussglieds an den Ventilsitz durch die Querverschiebung des mindestens einen Führungsstücks erreicht werden können.

Zweckmäßigerweise ist zur verschiebbaren Führung der mindestens einen Ventilstange durch das mindestens eine Führungsstück vorgesehen, dass eine jeweilige Ventilstange eine Öffnung des jeweiligen Führungsstücks durchsetzt. In einer vorteilhaften Ausführungsform sind zwei Ventilstangen vorhanden, die an ihren einen Enden mit dem Verschlussglied verbunden sind, vorzugsweise über einen die Ventilstangen verbindenden Tragbügel, und an ihren anderen Enden durch ein Joch verbunden sind. An diesem greift günstigerweise der Längshub-Antrieb an, wobei mindestens ein in die Längs-Verstellrichtung bewegbares Antriebsteil des Längshub-Antriebs vorzugsweise derart mit dem Joch verbunden ist, dass es gegenüber dem Joch in die Quer-Verstellrichtung beweglich ist. Der Längshub-Antrieb, d.h. mindestens ein Gehäuseteil des Längshub-Antriebs, kann dann starr mit dem Ventilkörper verbunden sein.

Günstigerweise liegen die Primär-Linearführungen parallel zur Längs-Verstellrichtung. Der Querhub-Antrieb, d.h. mindestens ein Gehäuseteil des Querhub-Antriebs, kann dann starr mit dem Ventilkörper verbunden sein.

In einer bevorzugten Ausführungsform der Erfindung sind zwei Schiebeteile vorgesehen, die jeweils von einer Primär-Linearführung gegenüber dem Ventilkörper verschiebbar geführt sind und jeweils von einer Sekundär-Linearführung gegenüber dem Führungsstück oder einem jeweiligen Führungsstück verschiebbar geführt sind und die durch ein Joch verbunden sind, an welchem der Querhub-Antrieb angreift.

Zur Führung der mindestens einen Ventilstange in einem dem Verschlussglied gegenüberliegenden Endbereich ist günstigerweise mindestens eine Längs-Linearführung vorgesehen, die am Ventilkörper befestigt ist und parallel zur Längs-Verstellrichtung liegt. Es ist hierbei mindestens ein Verbindungselement vorgesehen, welches eine Bewegbarkeit der mindestens einen Ventilstange parallel zur Quer-Verstellrichtung ermöglicht. Beispielsweise kann es sich bei diesem Verbindungselement um eine Blattfeder handeln. Eine Flächennormale auf diese Blattfeder steht hierbei rechtwinkelig zur Längs-Verstellrichtung.

Wenn in dieser Schrift von der Lage einer Linearführung oder einem Winkel, in welchem die Linearführung liegt, die Rede ist, so ist dies auf die Richtung bezogen, parallel zu der ein Schlitten der Linearführung in einem Führungsteil der Linearführung verschiebbar ist.

Als Linearführungen für die Primär- und/oder Sekundär-Linearführungen und/oder Längs-Linearführungen können vorteilhafterweise Schienenführungen eingesetzt werden, d.h. das Führungsteil, entlang von dem der Schlitten verschiebbar ist, wird von einer Führungsschiene gebildet. Insbesondere kann der Schlitten der Linearführung gegenüber der Führungsschiene wälzkörpergelagert sein, beispielsweise mittels Wälzkörperumlaufführungen oder mittels in Laufkäfigen gelagerten Wälzkörpern. Auch eine Gleitführung des Schlittens gegenüber der Führungsschiene ist grundsätzlich möglich. Vorzugsweise können herkömmliche Linearführungen eingesetzt werden, wie sie im Maschinenbau als Standartbauteile in großer Zahl verwendet werden. Solche Linearführungen sind kostengünstig, leichtgängig und weisen ein geringes Spiel oder kein Spiel (indem sie vorgespannt sind) auf.

Denkbar und möglich wäre auch der Einsatz von in andere Form ausgebildeten Linearführungen, beispielsweise eine Ausbildung in Form von Wellenführungen, bei denen die Führungsteile von im Querschnitt insbesondere runden Stäben gebildet werden. Auch eine Ausbildung mittels mindestens einer Führungsbahn ist denkbar und möglich, in welche mindestens ein Führungsfortsatz (Stift oder Rolle) eingreift, also eine Ausbildung nach Art einer Kulissenführung. Die Führungsbahn kann beispielsweise von einem Langloch, einer Nut oder einer Wulst gebildet werden.

Weitere Vorteile und Einzelheiten der Erfindung werden im Folgenden anhand der beiliegenden Zeichnung erläutert. In dieser zeigen:
Fig. 1 und 2 Schrägsichten eines Vakuumventils gemäß einem Ausführungsbeispiel der Erfindung aus verschiedenen Blickrichtungen in der Offenstellung des Verschlussglieds;
Fig. 3 und 4 eine Vorderansicht und eine Seitenansicht in der Offenstellung des Verschlussglieds;
Fig. 5 einen Schnitt entlang der Linie A-A von Fig. 4;
Fig. 6 einen Schnitt entlang der Linie B-B von Fig. 3;
Fig. 7 einen Schnitt entlang der Linie C-C von Fig. 5;
Fig. 8 einen Schnitt entlang der Linie D-D von Fig. 3;
Fig. 9 bis 12 Schnitte entsprechend den Schnitten der Fig. 5 bis 8, aber in der Zwischenstellung des Verschlussgliedes;
Fig. 13 bis 16 Schnitte entsprechend den Schnitten von Fig. 5 bis Fig. 8, aber in der Schließstellung des Verschlussgliedes;
Fig. 17 eine Explosionsdarstellung (Teile des Ventilgehäuses und des Antriebsgehäuses sind der Übersichtlichkeit halber weggelassen);

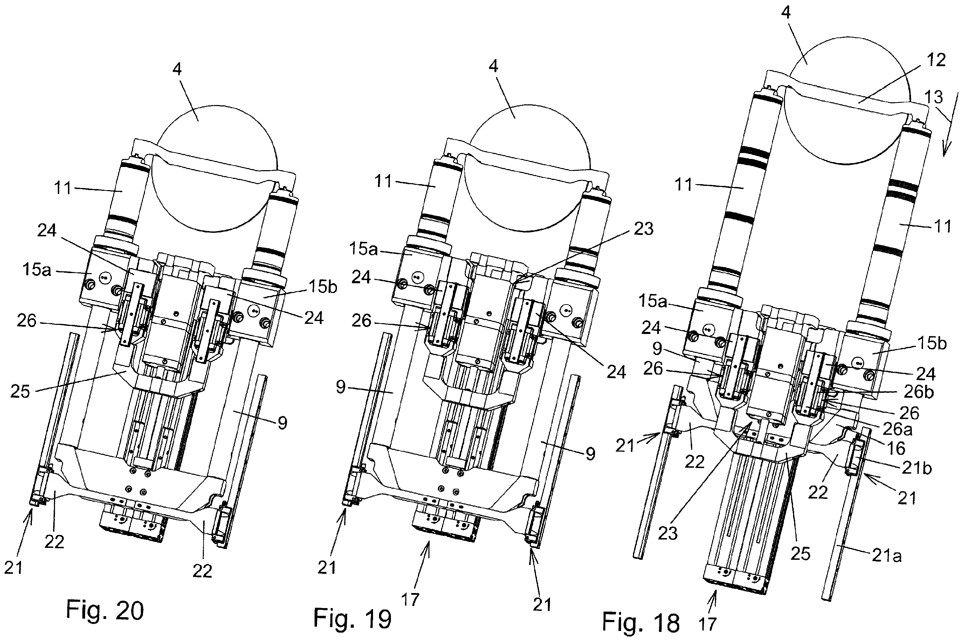

Fig. 18, 19 und 20 Schrägsichten in der Offenstellung, Zwischenstellung und Schließstellung des Verschlussglieds bei entferntem Ventilgehäuse;

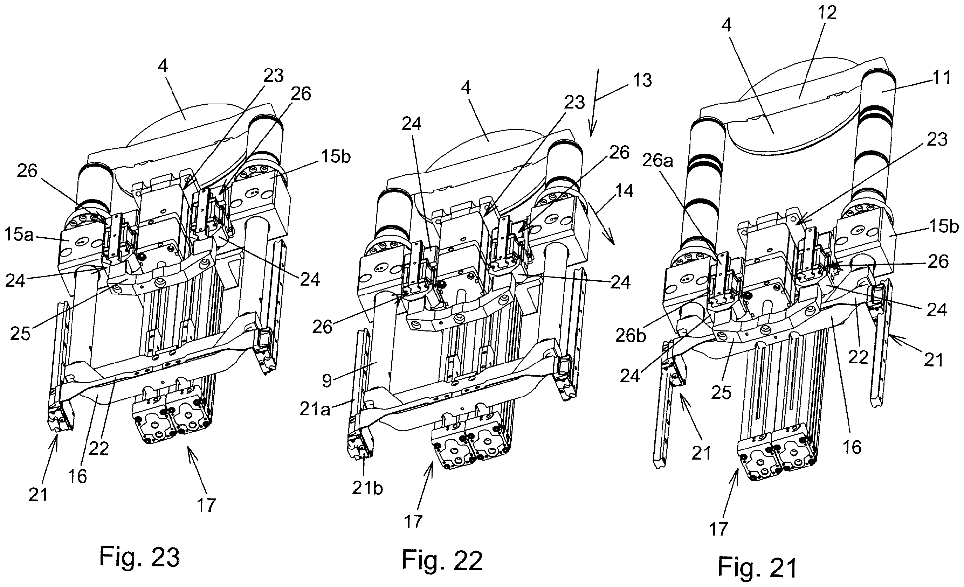

Fig. 21, 22 und 23 Schrägsichten analog Fig. 18, 19 und 20 aus einer anderen Blickrichtung.

Ein Ausführungsbeispiel eines Vakuumventils gemäß der Erfindung ist in den Figuren dargestellt.

Das Vakuumventil weist einen Ventilkörper 1 auf, der eine Wand 1a besitzt, welche eine Ventilöffnung 2 mit einer Achse 3 aufweist. Im geschlossenen Zustand des Vakuumventils ist die Ventilöffnung 2 durch ein, insbesondere plattenförmig ausgebildetes, Verschlussglied 4 verschlossen, welches dann seine Schließstellung einnimmt. In der Schließstellung des Verschlussglieds 4 ist dieses an einen Ventilsitz 5 angedrückt, der die Ventilöffnung 2 auf der dem Verschlussglied 4 zugewandten Seite umgibt. Im geöffneten Zustand des Vakuumventils gibt das Verschlussglied 4 die Ventilöffnung 2 frei und das Verschlussglied 4 nimmt dann seine Offenstellung ein. Die Verstellung des Verschlussgliedes 4 zwischen der Schließstellung und der Offenstellung erfolgt über eine Zwischenstellung, in welcher das Verschlussglied, in Richtung der Achse 3 der Ventilöffnung 2 gesehen, die Ventilöffnung 2 überdeckt aber vom Ventilsitz 5 abgehoben (=distanziert) ist.

Zur Abdichtung zwischen dem Verschlussglied 4 und der die Ventilöffnung 2 aufweisenden Wand des Ventilkörpers 1 in der Schließstellung des Verschlussglieds 4 dient ein am Verschlussglied 4 angeordneter elastischer Dichtring 6 (beispielsweise aus FKM oder FFKM) und der Ventilsitz 5 weist eine Dichtfläche auf, an der der Dichtring 6 angedrückt ist.

Grundsätzlich könnte der Dichtring 6 auch am Dichtsitz angeordnet sein und an eine Dichtfläche des Verschlussgliedes 4 angedrückt sein.

Der Ventilkörper 1 besitzt einen Innenraum 7, in welchem das Verschlussglied 4 angeordnet ist. Dieser Innenraum 7 des Ventilkörpers 1 bildet einen Vakuumbereich des Vakuumventils (= ein Bereich, in welchem ein Vakuum vorliegen kann). Der Ventilkörper 1 besitzt in einer weiteren Wand 1b eine weitere Öffnung 8, sodass ein den Innenraum 7 durchsetzender Durchgangskanal durch den Ventilkörper 1 ausgebildet ist. Dieser Durchgangkanal verläuft im Ausführungsbeispiel geradlinig in Richtung der Achse 3.

Die Wände 1a, 1b und die weiteren den Innenraum 7 umschließenden Teile, umfassend u.a. den Boden 1c, bilden im Ausführungsbeispiel zusammen also ein Ventilgehäuse des Ventilkörpers 1, welches den Innenraum 7 aufweist. Dieses ist starr mit einem Antriebsgehäuse des Ventilkörpers 1 verbunden, welches weiter unten beschriebene Elemente des Ventilantriebs aufnimmt. U.a. weist das Antriebsgehäuse Seitenwangen 1d, 1e auf.

Der Ventilkörper 1 kann an andere Teile einer Vakuumanlage angeschlossen werden, beispielsweise Vakuumkammern und/oder Rohrleitungen. Über die Ventilöffnung 2 steht der Innenraum 7 des Ventilkörpers 1 dann in der Offenstellung des Verschlussglieds 4 mit dem Innenraum eines ersten Teils der Vakuumanlage und über die Öffnung 8 steht der Innenraum 7 mit dem Innenraum eines weiteren Teils der Vakuumanlage in Verbindung.

Das Vakuumventil könnte grundsätzlich auch als sogenanntes Insert ausgebildet sein, wobei der Ventilkörper 1 im Betriebszustand des Vakuumventils im Innenraum einer Vakuumkammer an einer Wand der Vakuumkammer und abgedichtet zu dieser angeordnet sein könnte, sodass die Ventilöffnung 2 mit einer Öffnung in der Wand der Vakuumkammer fluchtet. Die gegenüberliegende Wand des Vakuumventils mit der Öffnung 8 könnte dann entfallen. Das Verschlussglied 4 ist auch dann in einem Vakuumbereich des Vakuumventils angeordnet.

Das Verschlussglied 4 wird von zwei Ventilstangen 9 getragen, im Ausführungsbeispiel über einen die Ventilstangen verbindenden Bügel 12, an dem das Verschlussglied 4 befestigt ist. Die Ventilstangen 9 sind durch Öffnungen im Boden 1c des Ventilkörpers 1 aus dem Vakuumbereich des Vakuumventils herausgeführt, wobei sie in Richtung ihrer parallel zueinander liegenden Längsachsen 10 (die parallel zur Längs-Verstellrichtung 13 liegen) und auch in eine hierzu winkelig, insbesondere rechtwinkelig stehende Quer-Verstellrichtung 14 beweglich sind. Zu diesem Zweck dient im Ausführungsbeispiel ein Faltenbalg 11. Auch eine andere Art einer Vakuumdurchführung kann hierzu grundsätzlich vorgesehen sein, beispielsweise eine andere Art eines Balges oder eine Lineardurchführung, die selbst in die Quer-Verstellrichtung 14 gegenüber dem Boden 1c abgedichtet verschiebbar gelagert ist.

Die Ventilstangen 9 sind durch mindesten ein außerhalb des Vakuumbereichs des Vakuumventils, im Ausführungsbeispiel also außerhalb des Ventilgehäuses, liegendes Führungsstück 15a, 15b in Richtung ihrer Längsachsen 10, also parallel zur Längs-Verstellrichtung 13 verschiebbar gelagert. Das mindestens eine Führungsstück 15a, 15b ist selbst in die Quer-Verstellrichtung 14 verstellbar, wie weiter unten genauer erläutert wird.

Im Ausführungsbeispiel ist für die beiden Ventilstangen 7 jeweils ein separates Führungsstück 15a, 15b vorhanden. Jedes der Führungsstücke 15a, 15b weist zur Längsführung der jeweiligen Ventilstange 9 eine Öffnung auf, durch welche sich die jeweilige Ventilstange 9 erstreckt. Die Führungsstücke 15a, 15b könnten beispielsweise auch einteilig miteinander ausgebildet sein oder durch ein Verbindungsteil miteinander verbunden sein.

Zur Verstellung der Ventilstange 9 in die und entgegen der Längs-Verstellrichtung 13 dient ein Längshub-Antrieb 17. Im Ausführungsbeispiel wird dieser von zwei Kolben-Zylinder-Einheiten gebildet, deren Gehäuse starr mit dem Ventilkörper 1 verbunden sind. Beispielsweise könnte der Längshub-Antrieb auch nur eine einzelne Kolben-Zylinder-Einheit aufweisen oder von einem in anderer Weise ausgebildeten Aktuator gebildet werden.

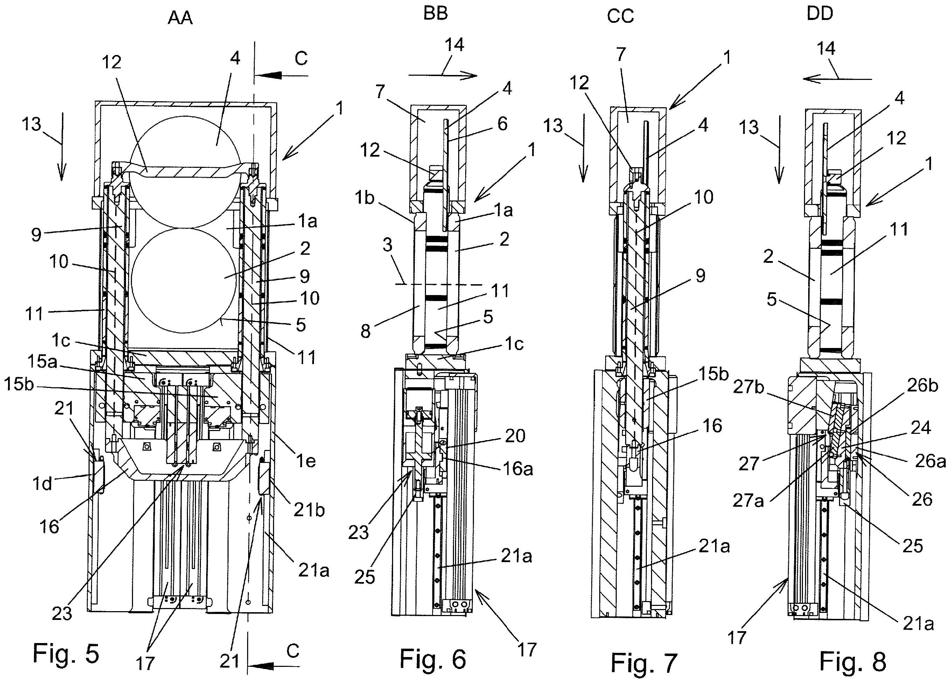

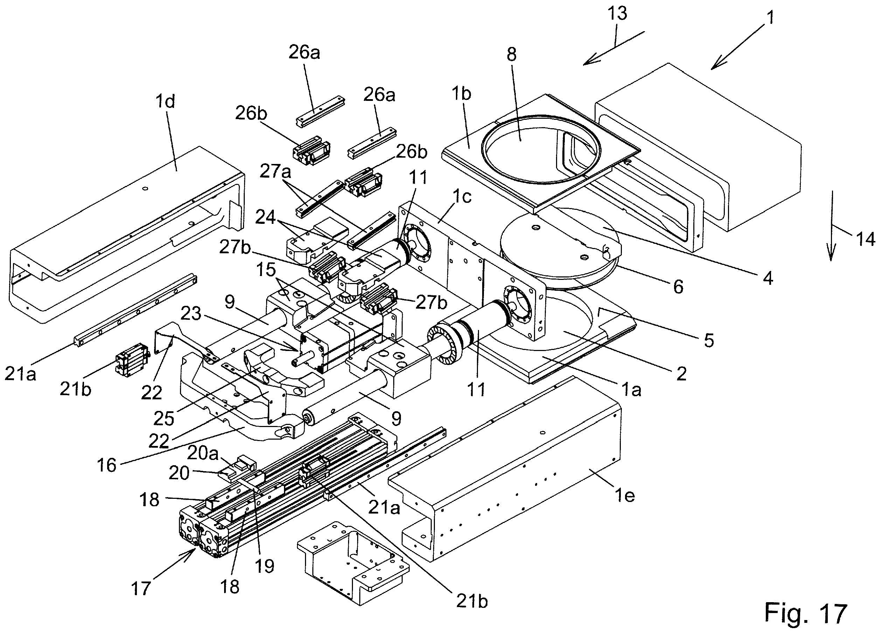

An ihren vom Verschlussglied 4 abgelegenen Enden sind die Ventilstangen 9 im Ausführungsbeispiel durch ein Joch 16 miteinander verbunden. Im Ausführungsbeispiel greift der Längshub-Antrieb 17 am Joch 16 an. Die Kolben-Zylinder-Einheiten können beispielsweise, wie herkömmlich bekannt, mit stangenlosen Kolben ausgerüstet sein, wobei die Bewegung der Kolben auf an der Außenseite der Zylindergehäuse liegende angetriebene Antriebsteile 18 übertragen wird. Mit diesen ist über einen Stift 19 ein Verbindungsteil 20 verbunden. Das Verbindungsteil 20 weist eine Vertiefung 20a (vgl. z.B. Fig. 17) auf, in welche ein Vorsprung 16a (vgl. z.B. Fig. 6) an der Unterseite des Jochs 16 eingreift. Auf diese Weise wird eine Verschiebung des Jochs 16 und damit der Ventilstange 9 gegenüber dem jeweiligen Antriebsteil 18 des Längshub-Antriebs 17 parallel zur Quer-Verschieberichtung 14 ermöglicht, wenn das Verschlussglied 4, wie weiter unten genauer beschrieben, von der Zwischenstellung in die Schließstellung und umgekehrt verstellt wird.

Zur Unterstützung der verschiebbaren Führung der Ventilstangen 9 in die Längs-Vertstellrichtung 13 dienen im Ausführungsbeispiel Längs-Linearführungen 21. Diese sind mit ihrem feststehenden Teil, im Ausführungsbeispiel dem schienenförmigen Führungsteil 21a, starr mit dem Ventilkörper 1 verbunden und mit ihrem beweglichen Teil, im Ausführungsbeispiel dem Schlitten 21b, jeweils über ein Verbindungselement 22 mit den Ventilstangen 9 verbunden, und zwar im Ausführungsbeispiel mit dem Joch 16. Bei den Verbindungselementen 22 handelt es sich im Ausführungsbeispiel um Blattfedern. Somit wird eine Bewegung der Ventilstange 9 parallel zur Quer-Verstellrichtung 14 ermöglicht.

Zur Verstellung der Führungsstücke 15, 15b und damit auch der Ventilstangen 9 und des von ihnen getragenen Verschlussglieds 4 in und entgegen der Quer-Verstellrichtung, die im Ausführungsbeispiel parallel zur Achse 3 der Ventilöffnung 2 liegt, wie dies bevorzugt ist, dient ein Querhub-Antrieb 23, der mit zwei Schiebeteilen 24 zusammenwirkt. Die beiden Schiebeteile 25 liegen beidseitig des Querhub-Antriebs 23 und sind durch ein Joch 25 miteinander verbunden. Der Querhub-Antrieb 23 wird im Ausführungsbeispiel von einer Kolben-Zylinder-Einheit gebildet, wobei das Zylindergehäuse mit dem Ventilkörper 1 starr verbunden ist. Die Kolbenstange dieser Kolben-Zylinder-Einheit ist mit dem Joch 25 verbunden. Für den Querhub-Antrieb 23 könnten beispielsweise auch zwei Kolben-Zylinder-Einheiten oder mindestens ein in anderer Weise ausgebildeter Aktuator vorgesehen sein.

Vorzugsweise wirkt der Querhub-Antrieb 23 parallel zur Längs-Verstellrichtung 13, wie in den Figuren dargestellt. Im Fall der Ausbildung als Kolben-Zylinder-Einheit ist also der mindestens eine Kolben (im Ausführungsbeispiel sind zwei Kolben vorhanden) parallel zur Längs-Verstellrichtung 13 verfahrbar.

Ein jeweiliges Schiebeteil 24 ist gegenüber dem Ventilkörper 1 durch eine jeweilige Primär-Linearführung 26 linear verschiebbar geführt. Der Schlitten (=Führungswagen) 26b der Primär-Linearführung ist hierbei starr mit dem Schiebeteil 24 verbunden und das geradlinig verlaufende Führungsteil 26a der Primär-Linearführung ist starr mit dem Ventilkörper 1 verbunden. Im Ausführungsbeispiel ist das Führungsteil 26a hierzu an einer jeweiligen der Seitenwangen ld, 1e befestigt. Auch eine umgekehrte Ausbildung, bei welcher das Führungsteil 26a mit dem Schiebeteil 24 und der Schlitten 24b mit dem Ventilkörper starr verbunden ist, ist denkbar und möglich.

Ein jeweiliges Schiebeteil 24 ist im Weiteren von einer jeweiligen Sekundär-Linearführung 27 gegenüber dem jeweiligen Führungsstück 15a, 15b linear verschiebbar geführt. Im Ausführungsbeispiel ist hierzu das geradlinig verlaufende Führungsteil 27 der Sekundär-Linearführung starr mit dem Schiebeteil 24 und der Schlitten (=Führungswagen) 27b der Sekundär-Linearführung starr mit dem jeweiligen Führungsstück 15a, 15b verbunden. Auch eine umgekehrte Ausbildung, d.h. eine starre Verbindung des Schlittens 27b mit dem Schiebeteil 24 und eine starre Verbindung des Führungsteils 27a mit dem jeweiligen Führungsstück 15a, 15b ist denkbar und möglich.

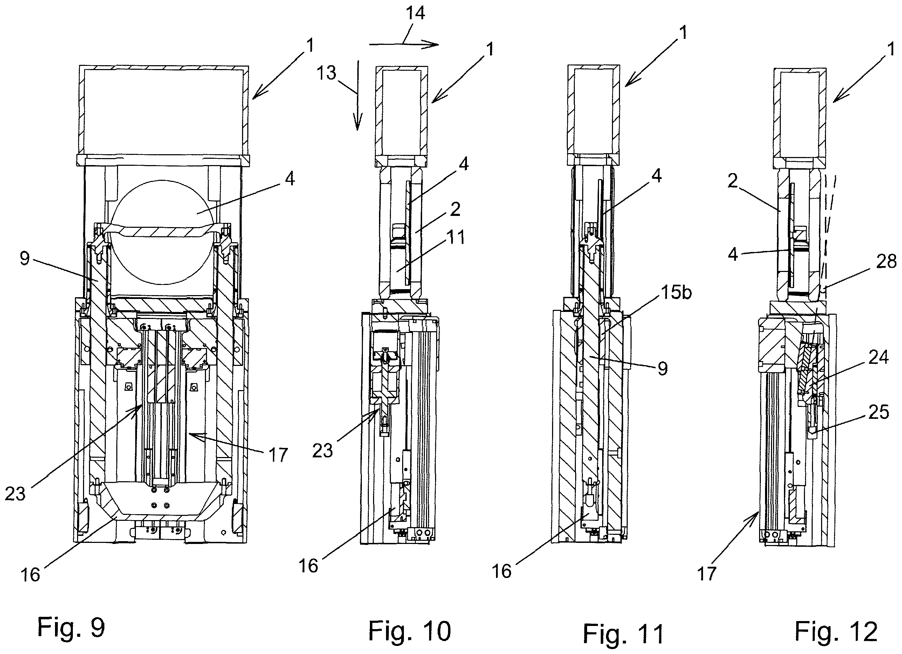

Die parallel zueinander liegenden Primär-Linearführungen 26 schließen mit den parallel zueinander liegenden Sekundär-Linearführungen 27 einen Winkel 28 (eingezeichnet in Fig. 12) von mehr als 3° und weniger als 45° ein. Vorzugsweise liegt der Winkel 28 im Bereich von 5° bis 20°.

Die Primär-Linearführungen 26 und Sekundär-Linearführungen 27 liegen hierbei in einer Ebene, die von der Längs-Verstellrichtung 13 und Quer-Verstellrichtung 14 aufgespannt wird.

Die Führungsrichtungen der Primär- und Sekundär-Linearführungen 26, 27 stehen also keilförmig zueinander, wobei die Spitze dieses Keils vorzugsweise auf der dem Verschlussglied 4 zugewandten Seite der Linearführungen 26, 27 liegt.

Die Primär-Linearführungen 26 liegen im Ausführungsbeispiel parallel zur Längs-Verstellrichtung 13.

In einer modifizierten Ausführungsform wäre auch eine Ausrichtung der Primär-Linearführung 26 winkelig zur Längs-Verstellrichtung 13 denkbar und möglich. Die Sekundär-Linearführungen 27 könnten dann parallel zur Längs-Verstellrichtung 13 oder ebenfalls winkelig zur Längs-Verstellrichtung 13 (aber jedenfalls keilförmig zu den Primär-Linearführungen 26) angeordnet sein. Die Winkel, unter denen die Primär- und Sekundär-Linearführungen 26, 27 zur Längs-Verstellrichtung 13 angeordnet sind, liegen aber jedenfalls unter 45°, vorzugsweise unter 25°.

Im Ausführungsbeispiel liegen die beiden Schiebeteile 24 zwischen den beiden Ventilstangen 9.

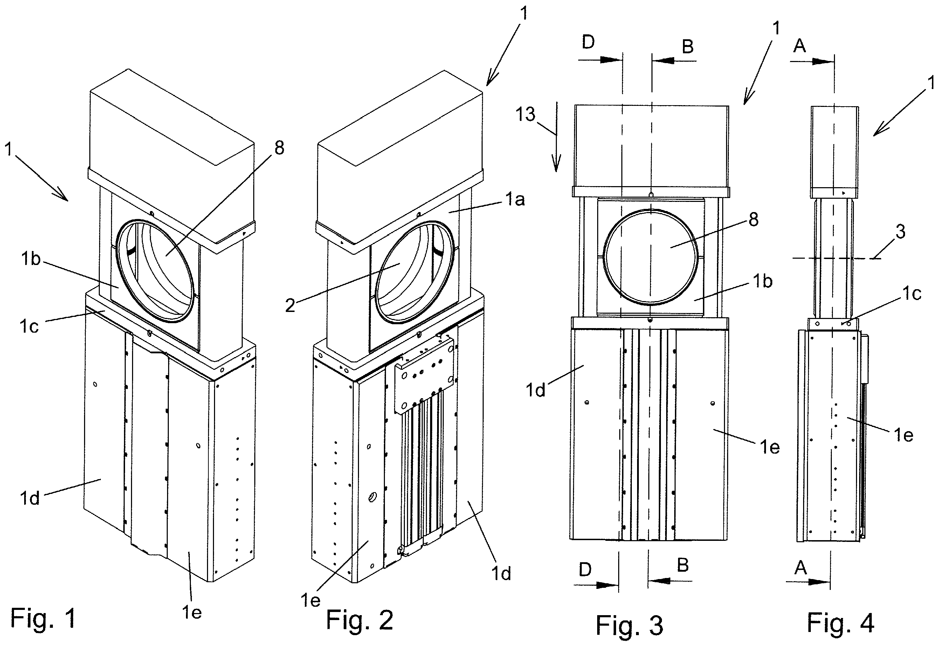

Zum Schließen des Vakuumventils ausgehend von der in den Fig. 1 bis 8 dargestellten Offenstellung, in der sich das Verschlussglied 4 in der Offenstellung befindet, wird das Verschlussglied 4 mittels des Längshub-Antriebs 17 zunächst in die Längs-Verstellrichtung 13 verschoben, bis es in seine in den Fig. 9 bis 12 dargestellte Zwischenstellung gelangt ist.

In der Offenstellung befindet sich das Verschlussglied 4 im Ausführungsbeispiel auf der vom Antrieb abgelegenen Seite der Ventilöffnung 2, d.h. die Ventilstangen 9 stehen vom Verschlussglied 4 in die Längs-Verstellrichtung ab, in welche die Verstellung des Verschlussglieds von der Offenstellung in die Zwischenstellung erfolgt. Mit anderen Worten wird das Verschlussglied 4 von der Offenstellung in die Zwischenstellung durch eine auf die Ventilstangen 9 wirkende Zugkraft und von der Zwischenstellung in die Offenstellung durch eine auf die Ventilstangen 9 wirkende Schubkraft verstellt.

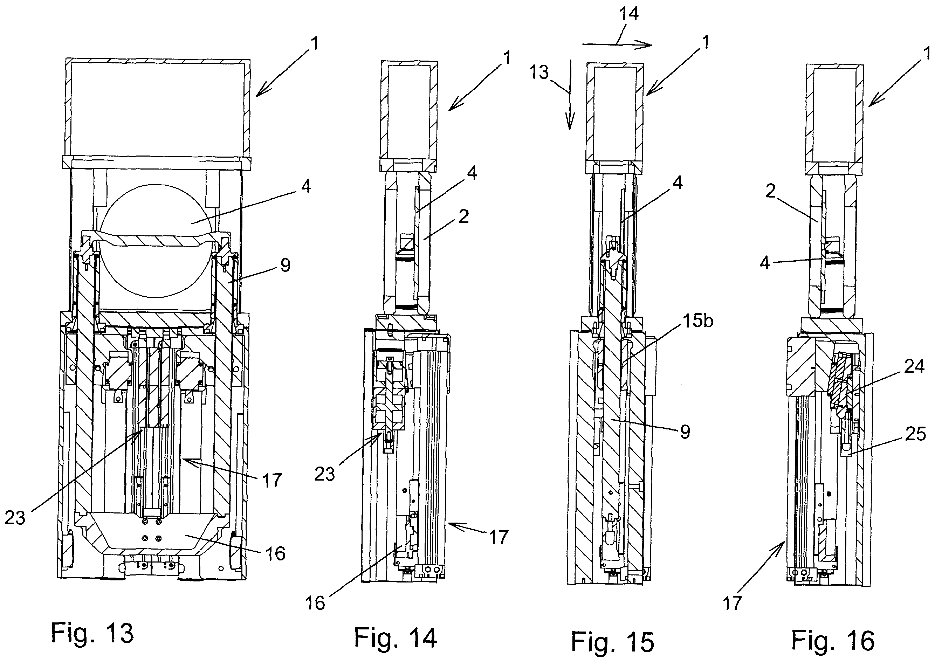

Um das Verschlussglied von der Zwischenstellung in die Schließstellung zu verstellen, in der das Vakuumventil geschlossen ist und welche in den Fig. 13 bis 16 dargestellt ist, werden die Schiebeteile 24 vom Querhub-Antrieb 23 von einer Anfangs- in eine Endstellung linear verschoben. Durch die Verschiebung der Schiebeteile 24 und die keilförmig zueinander stehenden Primär- und Sekundär-Linearführungen 26, 27 erfolgt hierbei eine lineare Verschiebung der Führungsstücke 15, 15b in die Quer-Verstellrichtung 14. Im Ausführungsbeispiel werden die Schiebeteile 24 wie bereits erwähnt, gegenüber dem Ventilkörper 1 in die Längs-Verstellrichtung 13 verschoben. Bei einer Schrägstellung der Primär-Linearführungen 26 gegenüber dem Ventilkörper 1 würde eine Verschiebung der Schiebeteile 24 gegenüber dem Ventilkörper 1 in eine winkelig zur Längs-Verschieberichtung stehende Schräg-Verschieberichtung erfolgen.

Das Öffnen des Vakuumventils erfolgt in der umgekehrten Reihenfolge. Zunächst werden die Schiebeteile 24 vom Querhub-Antrieb 23 von den Endstellungen in die Anfangsstellungen verschoben, wobei eine lineare Verstellung der Führungsstücke 15a, 15b entgegen der Quer-Verstellrichtung 14 und somit eine Verstellung des Verschlussglieds 4 entgegen der Quer-Verstellrichtung 14 von der Schließstellung in die Zwischenstellung erfolgt. In der Folge werden die Ventilstangen 9 und somit das Verschlussglied 4 durch den Längshub-Antrieb 17 entgegen der Längs-Verstellrichtung 13 verschoben, wodurch das Verschlussglied 4 von der Zwischenstellung in die Offenstellung verstellt wird.

Unterschiedliche weitere Modifikationen des gezeigten Ausführungsbeispiels sind denkbar und möglich, ohne den Bereich der Erfindung zu verlassen. So könnte beispielsweise das Verschlussglied 4 in der Offenstellung auf der dem Antrieb zugewandten Seite der Ventilöffnung 2 liegen (sodass das Verschlussglied also bei der Verstellung von der Offenstellung in die Zwischenstellung geschoben und bei der Verstellung von der Zwischenstellung in die Offenstellung gezogen wird).

Zur Verstellung der Führungsstücke 15a, 15b in die Quer-Verstellrichtung 14 könnte nur ein vom Querhub-Antrieb 23 beaufschlagtes Schiebeteil 24 vorhanden sein, wobei die Führungsstücke 15a, 15b starr miteinander verbunden sein könnten. Es könnte dann nur eine einzelne Primär-Linearführung 26 und/oder eine einzelne Sekundär-Linearführung 27 zur verschiebbaren Führung des Schiebeteils 26 vorhanden sein.

Es könnte nur eine Ventilstange zur Halterung des Verschlussglieds 4 vorgesehen sein, welche von einem Führungsstück parallel zur Längs-Verschieberichtung verschiebbar gelagert ist, wobei nur ein Schiebeteil 24 vorhanden sein könnte, welches mit dem Führungsstück zusammenwirkt.

Die Linearführungen 21, 26, 27 sind im Ausführungsbeispiel wie erwähnt als Schienenführungen ausgebildet, wie dies bevorzugt ist. Die Schlitten weisen hierbei einen an beiden Enden und zu einer Längsseite hin offenen Kanal auf, der einen verbreiterten Kopfbereich der Führungsschiene umgreift. Insbesondere weist der Kanal bezogen auf einen Querschnitt rechtwinkelig zur Längserstreckung der Führungsschiene einen Bereich mit einem größeren Durchmesser, in welchem der Kopfbereich der Führungsschiene liegt, und einen Bereich mit einem kleineren Durchmesser auf, durch den sich ein schmalerer Halsbereich der Führungsschiene erstreckt. Der Schlitten ist damit gegen ein Abziehen von der Führungsschiene in alle Richtungen rechtwinkelig zur Längserstreckung der Führungsschiene formschlüssig gesichert.

Die bezogen auf den Querschnitt rechtwinkelig zur Längserstreckung der Führungsschiene offene Seite des Kanals des Schlittens weist im Ausführungsbeispiel bei den Primär- und Sekundär-Linearführungen 26, 27 jeweils in eine Richtung, die in der von der Längs- und Quer-Verstellrichtung 13, 14 aufgespannten Ebene liegt. Stattdessen könnte diese Richtung auch winkelig, insbesondere rechtwinkelig zu dieser Ebene liegen.

Denkbar und möglich wäre es auch, dass einzelne oder alle dieser Linearführungen 21, 26, 27 in anderer Weise ausgebildet sind, beispielsweise in Form von Wellenführungen (bei welchen Stäbe, insbesondere mit rundem Querschnitt, anstelle von Schienen vorgesehen sind) oder Kulissenführungen.

Die Längs-Linearführungen 21 könnten grundsätzlich auch entfallen.

### Legende

### Zu den Hinweisziffern

| | | | |
|---|---|---|---|
| 1 | Ventilkörper | 21a | Führungsteil |
| 1a | Wand | 21b | Schlitten |
| 1b | Wand | 22 | Verbindungselement |
| 1c | Boden | 23 | Querhub-Antrieb |
| 1d | Seitenwange | 24 | Schiebeteil |
| 1e | Seitenwange | 25 | Joch |
| 2 | Ventilöffnung | 26 | Primär-Linearführung |
| 3 | Achse | 26a | Führungsteil |
| 4 | Verschlussglied | 26b | Schlitten |
| 5 | Ventilsitz | 27 | Sekundär-Linearführung |
| 6 | Dichtring | 27a | Führungsteil |
| 7 | Innenraum | 27b | Schlitten |
| 8 | Öffnung | 28 | Winkel |
| 9 | Ventilstange | | |
| 10 | Längsachse | | |
| 11 | Faltenbalg | | |
| 12 | Bügel | | |
| 13 | Längs-Verstellrichtung | | |
| 14 | Quer-Verstellrichtung | | |
| 15a | Führungsstück | | |
| 15b | Führungsstück | | |
| 16 | Joch | | |
| 16a | Vorsprung | | |
| 17 | Längshub-Antrieb | | |
| 18 | Antriebsteil | | |
| 19 | Stift | | |
| 20 | Verbindungsteil | | |
| 20a | Vertiefung | | |
| 21 | Längs-Linearführung | | |

## Patentansprüche

1. Vakuumventil umfassend
- einen Ventilkörper (1) mit einer von einem Ventilsitz (5) umgebenen Ventilöffnung (2),
- ein Verschlussglied (4), welches zwischen einer Offenstellung, in der es die Ventilöffnung (2) freigibt, und einer Zwischenstellung, in der es die Ventilöffnung (2) überdeckt aber vom Ventilsitz (5) abgehoben ist, parallel zu einer Längs-Verstellrichtung (13) verstellbar ist und welches zwischen der Zwischenstellung und der Schließstellung, in der es am Ventilsitz (5) anliegt, parallel zu einer Quer-Verstellrichtung (14) verstellbar ist,
- mindestens eine das Verschlussglied (4) tragende, parallel zur Längs-Verstellrichtung (13) liegende Ventilstange (9),
- mindestens ein Führungsstück (15a, 15b)
- einen Längshub-Antrieb (17), von dem zur Verstellung des Verschlussglieds (4) zwischen der Offenstellung und der Zwischenstellung die mindestens eine Ventilstange (9) parallel zur Längs-Verstellrichtung (13) verschiebbar ist,
- einen Querhub-Antrieb (23), von dem zur Verstellung des Verschlussglieds (4) zwischen der Zwischenstellung und der Schließstellung das mindestens eine Führungsstück (15a, 15b) parallel zur Quer-Verstellrichtung (14) verstellbar ist, und
- mindestens ein Schiebeteil (24), welches von mindestens einer Primär-Linearführung (26) gegenüber dem Ventilkörper (1) verschiebbar geführt ist und welches von mindestens einer Sekundär-Linearführung (27) gegenüber dem mindestens einen Führungsstück (15a, 15b) verschiebbar geführt ist,
wobei die Primär- und Sekundär-Linearführungen (26, 27) gegenüber der Längs-Verstellrichtung (13) jeweils einen Winkel von weniger als 45° aufweisen und die mindestens eine Primär-Linearführung (26) mit der mindestens einen Sekundär-Linearführung (27) einen Winkel von mehr als 3° und weniger als 45° einschließt und wobei zur Verstellung des mindestens einen Führungsstücks (15a, 15b) parallel zur Quer-Verstellrichtung (14) das mindestens eine Schiebeteil (24) vom Querhub-Antrieb (23) verschiebbar ist,
**dadurch gekennzeichnet, dass** die mindestens eine Ventilstange (9) vom mindestens einen Führungsstück (15a, 15b) parallel zur Längs-Verstellrichtung (13) verschiebbar geführt ist und vom Längshub-Antrieb (17) zur Verstellung des Verschlussglieds (4) zwischen der Offenstellung und der Zwischenstellung gegenüber dem mindestens einen Führungsstück (15a, 15b) verschiebbar ist.

2. Vakuumventil nach Anspruch 1, **dadurch gekennzeichnet, dass** die mindestens eine Primär-Linearführung (26) parallel zur Längs-Verstellrichtung (13) liegt und die Verschiebung des mindestens einen Schiebeteils (24) durch den Querhub-Antrieb (23) parallel zur Längs-Verstellrichtung (13) erfolgt.

3. Vakuumventil nach Anspruch 1 oder 2, **dadurch gekennzeichnet, dass** der Längshub-Antrieb (17) starr mit dem Ventilkörper (1) verbunden ist und mindestens ein bewegbares Antriebsteil (18) des Längshub-Antriebs (17) in die Quer-Verstellrichtung (14) beweglich mit der mindestens einen Ventilstange (9) verbunden ist.

4. Vakuumventil nach einem der Ansprüche 1 bis 3, **dadurch gekennzeichnet, dass** zwei Ventilstangen (9) vorgesehen sind, die das Verschlussglied (4) tragen und die an einem vom Verschlussglied (4) abgelegenen Ende durch ein Joch (16) miteinander verbunden sind, an welchem der Längshub-Antrieb (17) angreift.

5. Vakuumventil nach einem der Ansprüche 1 bis 4, **dadurch gekennzeichnet, dass** das mindestens eine Führungsstück (15a, 15b) zur verschiebbaren Führung einer jeweiligen Ventilstange (9) jeweils eine von der Ventilstange (9) durchsetzte Öffnung aufweist.

6. Vakuumventil nach einem der Ansprüche 1 bis 5, **dadurch gekennzeichnet, dass** ein erstes und ein zweites Schiebeteil (24) vorgesehen sind, die jeweils von mindestens einer Primär-Linearführung (26) gegenüber dem Ventilkörper (1) verschiebbar geführt sind und jeweils von mindestens einer Sekundär-Linearführung (27) gegenüber dem mindestens einen Führungsstück (15a, 15b) verschiebbar geführt sind, und die durch ein Joch (25) verbunden sind, an welchem der Querhub-Antrieb (23) angreift .

7. Vakuumventil nach einem der Ansprüche 1 bis 6, **dadurch gekennzeichnet, dass** der Querhub-Antrieb (23) starr mit dem Ventilkörper (1) verbunden ist.

8. Vakuumventil nach einem der Ansprüche 1 bis 7, **dadurch gekennzeichnet, dass** der Längshub-Antrieb (17) mindestens eine Kolben-Zylinder-Einheit aufweist und der Querhub-Antrieb (23) mindestens eine Kolben-Zylinder-Einheit aufweist und die Kolben-Zylinder-Einheiten des Längshub-Antriebs (17) und des Querhub-Antriebs (23) parallel zueinander liegen.

9. Vakuumventil nach einem der Ansprüche 1 bis 8, **dadurch gekennzeichnet, dass** die durch die mindestens eine Sekundär-Linearführung (27) vorgegebene Führungsrichtung keilförmig zu der durch die mindestens eine Primär-Linearführung (26) vorgegebene Führungsrichtung steht, wobei die Spitze des Keils auf der dem Verschlussglied (4) zugewandten Seite der Primär- und Sekundär-Linearführungen (26, 27) liegt.

10. Vakuumventil nach einem der Ansprüche 1 bis 9, **dadurch gekennzeichnet, dass** die mindestens eine Ventilstange (9) außerhalb eines Vakuumbereichs des Vakuumventils vom mindestens einen Führungsstück (15a, 15b) verschiebbar gelagert ist.

11. Vakuumventil nach einem der Ansprüche 1 bis 10, **dadurch gekennzeichnet, dass** das Verschlussglied (4) in der Offenstellung auf der vom Längshub- und Querhub-Antrieb (17, 23) abgelegenen Seite der Ventilöffnung (2) liegt.

12. Vakuumventil nach einem der Ansprüche 1 bis 11, **dadurch gekennzeichnet, dass** zur Führung der mindestens einen Ventilstange (9) in einem vom Verschlussglied (4) abgelegenen Endbereich mindestens eine Längs-Linearführung (21) vorgesehen ist, von welcher ein Führungsteil (21a) oder ein Schlitten (21b) starr mit dem Ventilkörper (1) verbunden ist und das andere dieser beiden Teile (21a, 21b) mit der mindestens einen Ventilstange (9) verbunden ist und wobei mindestens ein eine Bewegbarkeit der mindestens einen Ventilstange (9) parallel zur Quer-Verstellrichtung (14) ermöglichendes Verbindungselement (22) vorgesehen ist.

13. Vakuumventil nach Anspruch 12, **dadurch gekennzeichnet, dass** das mindestens eine eine Bewegbarkeit der mindestens einen Ventilstange (9) parallel zur Quer-Verstellrichtung (14) ermöglichende Verbindungselement (22) eine Blattfeder ist, die eine rechtwinkelig zur Längs-Verstellrichtung stehende Flächennormale aufweist.

14. Vakuumventil nach einem der Ansprüche 1 bis 13, **dadurch gekennzeichnet, dass** die mindestens eine Primär-Linearführung (26) und die mindestens eine Sekundär-Linearführung (27) einen Winkel von weniger als 25° mit der Längs-Verstellrichtung (13) einschließen.

15. Vakuumventil nach Anspruch 14, **dadurch gekennzeichnet, dass** die mindestens eine Primär-Linearführung (26) mit der mindestens einen Sekundär-Linearführung (27) einen Winkel (28) von mehr als 4° und weniger als 25° einschließt.

## Claims

1. A vacuum valve, comprising
- a valve body (1) with a valve opening (2) surrounded by a valve seat (5),
- a closure member (4) which is adjustable parallel to a longitudinal adjustment direction (13) between an open position, in which it uncovers the valve opening (2), and an intermediate position, in which it covers the valve opening (2) but is lifted off from the valve seat (5), and which is adjustable parallel to a transverse adjustment direction (14) between the intermediate position and the closed position, in which it lies against the valve seat (5),
- at least one valve stem (9) bearing the closure member (4) and lying parallel to the longitudinal adjustment direction (13),
- at least one guide piece (15a, 15b),
- a longitudinal-stroke drive (17), by which the at least one valve stem (9) is displaceable parallel to the longitudinal adjustment direction (13) in order to adjust the closure member (4) between the open position and the intermediate position,
- a transverse-stroke drive (23), by which the at least one guide piece (15a, 15b) is adjustable parallel to the transverse adjustment direction (14) in order to adjust the closure member (4) between the intermediate position and the closed position, and
- at least one sliding part (24) which is guided displaceably relative to the valve body (1) by at least one primary linear guide (26) and which is guided displaceably relative to the at least one guide piece (15a, 15b) by at least one secondary linear guide (27),
wherein the primary and secondary linear guides (26, 27) are each at an angle of less than 45° relative to the longitudinal adjustment direction (13) and the at least one primary linear guide (26) encloses an angle of more than 3° and less than 45° with the at least one secondary linear guide (27), and wherein the at least one sliding part (24) is displaceable by the transverse-stroke drive (23) in order to adjust the at least one guide piece (15a, 15b) parallel to the transverse adjustment direction (14),
**characterised in that** the at least one valve stem (9) is guided displaceably parallel to the longitudinal adjustment direction (13) by at least one guide piece (15a, 15b) and is displaceable in relation to the at least one guide piece (15a, 15b) by the longitudinal-stroke drive (17) in order to adjust the closure member (4) between the open position and the intermediate position.

2. A vacuum valve according to claim 1, **characterised in that** the at least one primary linear guide (26) is parallel to the longitudinal adjustment direction (13) and the displacement of the at least one sliding part (24) by the transverse-stroke drive (23) takes place parallel to the longitudinal adjustment direction (13).

3. A vacuum valve according to claim 1 or 2, **characterised in that** the longitudinal-stroke drive (17) is connected rigidly to the valve body (1) and at least one movable drive part (18) of the longitudinal-stroke drive (17) is connected movably in the transverse adjustment direction (14) to the at least one valve stem (9).

4. A vacuum valve according to one of claims 1 to 3, **characterised in that** two valve stems (9) are provided which bear the closure member (4) and which at an end which is remote from the closure member (4) are connected together by a yoke (16) on which the longitudinal-stroke drive (17) acts.

5. A vacuum valve according to one of claims 1 to 4, **characterised in that** the at least one guide piece (15a, 15b) for displaceably guiding a respective valve stem (9) has in each case an opening through which the valve stem (9) passes.

6. A vacuum valve according to one of claims 1 to 5, **characterised in that** a first and a second sliding part (24) are provided which are each guided displaceably relative to the valve body (1) by at least one primary linear guide (26) and are guided displaceably relative to the at least one guide piece (15a, 15b) in each case by at least one secondary linear guide (27), and which are connected by a yoke (25) on which the transverse-stroke drive (23) acts.

7. A vacuum valve according to one of claims 1 to 6, **characterised in that** the transverse-stroke drive (23) is connected rigidly to the valve body (1).

8. A vacuum valve according to one of claims 1 to 7, **characterised in that** the longitudinal-stroke drive (17) has at least one piston/cylinder unit and the transverse-stroke drive (23) has at least one piston/cylinder unit, and the piston/cylinder units of the longitudinal-stroke drive (17) and of the transverse-stroke drive (23) are parallel to each other.

9. A vacuum valve according to one of claims 1 to 8, **characterised in that** the direction of guidance prescribed by the at least one secondary linear guide (27) is in a wedge shape in relation to the direction of guidance prescribed by the at least one primary linear guide (26), the tip of the wedge being located on that side of the primary and secondary linear guides (26, 27) which faces the closure member (4).

10. A vacuum valve according to one of claims 1 to 9, **characterised in that** the at least one valve stem (9) is displaceably mounted outside a vacuum region of the vacuum valve by the at least one guide piece (15a, 15b).

11. A vacuum valve according to one of claims 1 to 10, **characterised in that** the closure member (4) in the open position is located on that side of the valve opening (2) which is remote from the longitudinal-stroke drive and transverse-stroke drive (17, 23).

12. A vacuum valve according to one of claims 1 to 11, **characterised in that** at least one longitudinal linear guide (21) is provided to guide the at least one valve stem (9) in an end region which is remote from the closure member (4), of which linear guide a guide part (21a) or a slide (21b) is connected rigidly to the valve body (1) and the other one of these two parts (21a, 21b) is connected to the at least one valve stem (9), and with at least a connecting element (22) which enables the at least one valve stem (9) to be movable parallel to the transverse adjustment direction (14) being provided.

13. A vacuum valve according to claim 12, **characterised in that** the at least one connecting element (22) which enables the at least one valve stem (9) to be movable parallel to the transverse adjustment direction (14) is a leaf spring which has a surface normal which is at right-angles to the longitudinal adjustment direction.

14. A vacuum valve according to one of claims 1 to 13, **characterised in that** the at least one primary linear guide (26) and the at least one secondary linear guide (27) enclose an angle of less than 25° with the longitudinal adjustment direction (13).

15. A vacuum valve according to claim 14, **characterised in that** the at least one primary linear guide (26) encloses an angle (28) of more than 4° and less than 25° with the at least one secondary linear guide (27).

## Revendications

1. Soupape à vide comprenant
- un corps de soupape (1) avec une ouverture de soupape (2) entourée par un siège de soupape (5),
- un organe d'obturation (4) qui peut être déplacé parallèlement à une direction de déplacement longitudinale (13) entre une position ouverte, dans laquelle il libère l'ouverture de soupape (2), et une position intermédiaire, dans laquelle il recouvre l'ouverture de soupape (2) mais est écarté du siège de soupape (5), et qui peut être déplacé parallèlement à une direction de déplacement transversale (14) entre la position intermédiaire et la position de fermeture dans laquelle il est appliqué contre le siège de soupape (5),
- au moins une tige de soupape (9) portant l'organe d'obturation (4) et disposée parallèlement à la direction de déplacement longitudinale (13),
- au moins une pièce de guidage (15a, 15b)
- un entraînement de course longitudinale (17) par lequel ladite au moins une tige de soupape (9) peut être déplacée parallèlement à la direction de déplacement longitudinale (13) pour le déplacement de l'organe d'obturation (4) entre la position ouverte et la position intermédiaire,
- un entraînement de course transversale (23) par lequel ladite au moins une pièce de guidage (15a, 15b) peut être déplacée parallèlement à la direction de déplacement transversale (14) pour le déplacement de l'organe d'obturation (4) entre la position intermédiaire et la position d'obturation, et
- - au moins une pièce coulissante (24), qui est guidée par au moins un guidage linéaire primaire (26) de manière à pouvoir coulisser par rapport au corps de soupape (1), et qui est guidée par au moins un guidage linéaire secondaire (27) de manière à pouvoir coulisser par rapport à ladite au moins une pièce de guidage (15a, 15b),
les guidages linéaires primaire et secondaire (26, 27) présentant chacun un angle de moins de 45° par rapport à la direction de déplacement longitudinale (13), et ledit au moins un guidage linéaire primaire (26) forme avec ledit au moins un guidage linéaire secondaire (27) un angle de plus de 3° et de moins de 45° et, pour le déplacement de ladite au moins une pièce de guidage (15a, 15b) parallèlement à la direction de déplacement transversale (14), ladite au moins une pièce coulissante (24) peut être déplacée par l'entraînement de course transversale (23),
**caractérisé en ce que** ladite au moins une tige de soupape (9) est guidée par ladite au moins une pièce de guidage (15a, 15b) de manière à pouvoir être déplacée parallèlement à la direction de déplacement longitudinale (13), et peut être déplacée par rapport à ladite au moins une pièce de guidage (15a, 15b) par l'entraînement de course longitudinale (17) pour le déplacement de l'organe d'obturation (4) entre la position ouverte et la position intermédiaire.

2. Soupape à vide selon la revendication 1, **caractérisée en ce que** ledit au moins un guide linéaire primaire (26) est disposé parallèlement à la direction de déplacement longitudinale (13), et le déplacement de ladite au moins une pièce coulissante (24) par l'entraînement de course transversale (23) est réalisé parallèlement à la direction de réglage longitudinale (13).

3. Soupape à vide selon la revendication 1 ou 2, **caractérisée en ce que** l'entraînement de course longitudinale (17) est relié de manière rigide au corps de soupape (1), et au moins une partie d'entraînement mobile (18) de l'entraînement de course longitudinale (17) est reliée à ladite au moins une tige de soupape (9) de manière mobile dans la direction de déplacement transversale (14).

4. Soupape à vide selon l'une des revendications 1 à 3, **caractérisée en ce qu'**il est prévu deux tiges de soupape (9) qui portent l'organe d'obturation (4) et qui sont reliées entre elles à une extrémité éloignée de l'organe d'obturation (4) par un étrier (16) sur lequel s'engage l'entraînement de course longitudinale (17).

5. Soupape à vide selon l'une des revendications 1 à 4, **caractérisée en ce que** ladite au moins une pièce de guidage (15a, 15b) est munie d'une ouverture traversée par la tige de soupape (9) respective pour le déplacement guidé de la tige de soupape (9) respective.

6. Soupape à vide selon l'une des revendications 1 à 5, **caractérisée en ce qu'**il est prévu une première et une deuxième pièce coulissante (24) qui sont guidées chacune par au moins un guidage linéaire primaire (26) de manière à pouvoir coulisser par rapport au corps de soupape (1), et qui sont guidées chacune par au moins un guidage linéaire secondaire (27) de manière à pouvoir coulisser par rapport à ladite au moins une pièce de guidage (15a, 15b), et qui sont reliées par un étrier (25) sur lequel s'engage l'entraînement de course transversale (23).

7. Soupape à vide selon l'une des revendications 1 à 6, **caractérisée en ce que** l'entraînement de course transversale (23) est relié de manière rigide au corps de soupape (1).

8. Soupape à vide selon l'une des revendications 1 à 7, **caractérisée en ce que** l'entraînement de course longitudinale (17) est muni d'au moins un ensemble piston-cylindre, et l'entraînement de course transversale (23) est munie d'au moins un ensemble piston-cylindre, et les ensembles piston-cylindre de l'entraînement de course longitudinale (17) et de l'entraînement de course transversale (23) sont parallèles entre eux.

9. Soupape à vide selon l'une quelconque des revendications 1 à 8, **caractérisée en ce que** la direction de guidage donnée par ledit au moins un guide linéaire secondaire (27) est en forme de biseau par rapport à la direction de guidage donnée par ledit au moins un guide linéaire primaire (26), la pointe du biseau étant située du côté des guides linéaires primaire et secondaire (26, 27) dirigé vers l'organe d'obturation (4).

10. Soupape à vide selon l'une des revendications 1 à 9, **caractérisée en ce que** ladite au moins une tige de soupape (9) est logée coulissante par ladite au moins une pièce de guidage (15a, 15b) en dehors d'une zone de vide de la soupape à vide.

11. Soupape à vide selon l'une des revendications 1 à 10, **caractérisée en ce qu'**en position ouverte, l'organe d'obturation (4) est situé du côté de l'ouverture de soupape (2) qui est éloigné de l'entraînement de course longitudinale et de course transversale (17, 23).

12. Soupape à vide selon l'une des revendications 1 à 11, **caractérisée en ce que** pour guider ladite au moins une tige de soupape (9) dans une zone d'extrémité éloignée de l'organe d'obturation (4), il est prévu moins un guidage linéaire longitudinal (21) dont une partie de guidage (21a) ou un chariot (21b) est relié(e) de manière rigide au corps de soupape (1) et l'autre de ces deux pièces (21a, 21b) est reliée à ladite au moins une tige de soupape (9), et il est prévu au moins un élément de liaison (22) permettant une mobilité de ladite au moins une tige de soupape (9) parallèlement à la direction de déplacement transversale (14).

13. Soupape à vide selon la revendication 12, **caractérisée en ce que** ledit au moins un élément de liaison (22) permettant une mobilité de ladite au moins une tige de soupape (9) parallèlement à la direction de déplacement transversale (14) est un ressort à lame dont la normale à la surface est perpendiculaire à la direction de déplacement longitudinale.

14. Soupape à vide selon l'une des revendications 1 à 13, **caractérisée en ce que** ledit au moins un guide linéaire primaire (26) et ledit au moins un guide linéaire secondaire (27) forment avec la direction de déplacement longitudinal (13) un angle inférieur à 25°.

15. Soupape à vide selon la revendication 14, **caractérisée en ce que** ledit au moins un guide linéaire primaire (26) forme avec ledit au moins un guide linéaire secondaire (27) un angle (28) supérieur à 4° et inférieur à 25°.
